# EUROPÄISCHE PATENTSCHRIFT

(11) **EP 0 471 329 B1**
(45) Veröffentlichungstag und Bekanntmachung des Hinweises auf die Patenterteilung: **06.12.1995**
(21) Anmeldenummer: 91113542.4
(22) Anmeldetag: 13.08.1991
(51) Int. Cl.: F16C 33/16, C04B 41/50, C04B 41/48

(54) **Verwendung von imprägniertem Elektrographit als Gleitkörper in Form von Drehschiebern und Gleitringen**
Use of impregnated electrographite as slide members in the form of vanes for pumps or slide rings of mechanical seals
Utilisation d'électrographite imprégné comme corps glissants en forme des vannes rotatives et anneaux de glissement d'une garniture mécanique d'étanchéité

(30) Priorität: 16.08.1990 DE 4025914
(43) Veröffentlichungstag der Anmeldung: 19.02.1992
(73) Patentinhaber: Schunk Kohlenstofftechnik GmbH, D-35452 Heuchelheim (DE)
(72) Erfinder: Kehr, Dieter, Dr. Dipl.-Chem., W-6301 Biebertal (DE); Sauer, Karl-Heinz, W-6301 Biebertal (DE)
(74) Vertreter: Sternagel, Hans-Günther, Dr.

(56) Entgegenhaltungen:
- EP-A- 0 007 606
- DE-A- 3 113 004
- DE-C- 965 670
- US-A- 2 909 452
- US-A- 4 119 572

## Beschreibung

Die Erfindung richtet sich auf die Verwendung von imprägniertem Elektrographit als Gleitkörper für spezielle Zwecke, insbesondere auf Anwendungsfälle mit extremer Trockenreibung.

Kohlenstoff und Graphitwerkstoffe werden aufgrund der guten Verschleißfestigkeit als Gleitwerkstoffe eingesetzt.

Beim extremen Trockenlauf tritt jedoch auch bei diesen Werkstoffen ein Anstieg des Reibwertes und des Verschleißes auf, da die normalerweise gefundenen geringen Reibwerte auf adsorbierten Flüssigkeitsschichten beruhen, so daß auch im normalen Trockenlauf Epilamenreibung vorliegt.

Man hat deshalb versucht, die Werkstoffe zu modifizieren, beispielsweise durch Imprägnierung, wobei die Imprägnierung sowohl die physikalischen Eigenschaften, wie Festigkeit, Härte, erhöhen bzw. verbessern, als auch das Reibverhalten beeinflussen.

Es sind Imprägnierungen mit verschiedenen Thermoplasten und Duroplasten, wie Polyäthylen, Phenol- und Furanharze sowie Polyester und Acrylatharze, aber auch mit anorganischen Salzen und Gläsern bekannt. Paxton (R. Robert Paxton, "Manufactured Carbon: A Self-Lubricating Material for Mechanical Devices", CRC Press Inc., Florida 1979) beschreibt eine Reihe organischer und anorganischer Imprägnierungen, während in den Patentschriften DE-B-2 832 048, DE-B-1 091 218, DE-B-1 926 126, DE-A-2 520 529 und DE-A-3 113 004 spezielle Imprägnierungen mit Polymeren vorgeschlagen werden.

Für die Anwendungen als Schieber eignen sich Imprägnierungen mit Zink- oder Aluminiumphosphaten und Borphosphoroxid, sei es aus der Schmelze oder aus der Lösung mit anschließendem Trocknen und Abglühen.

Diese Imprägniermittel liegen in den Poren des Graphits als Gläser vor. Ihre Wirkung beruht darauf, daß sie leicht hygroskopisch sind und somit aus der Luft Feuchtigkeit aufnehmen. Das führt auch bei extremer Trockenreibung immer noch zu einer gewissen Feuchtigkeitsschmierung über ad- und absorbierte Flüssigkeiten. Die Phosphate wirken hier also als Flüssigkeitsreservoir. Bei hoher Luftfeuchtigkeit wirken sich aber gerade die hygroskopischen Eigenschaften der Phosphate nachteilig aus. Sie nehmen so viel Feuchtigkeit auf, daß sie als Lösung aus dem Material austreten. Beim anschließenden Trocknen bildet sich ein glasartiger Film auf der Gleitfläche und verschlechtert die Gleiteigenschaften. Diese übermäßige Hygroskopizität der phosphatimprägnierten Teile kann zwar durch Glühen bei höheren Temperaturen vermindert werden, hat jedoch den Nachteil, daß die günstigere Wirkung bei der Trockenreibung verlorengeht.

Ein weiterer Nachteil der an sich für extreme Trockenreibung vorteilhaften Phosphatimprägnierung liegt darin, daß es bei dynamischer Belastung der Lager zu einer Zerrüttung der glasartigen Phosphatimprägnierung in den Poren kommen kann mit der Folge, daß Partikel während des Laufes austreten und zu hohem Verschleiß der Gleitfläche führen.

Kunstharzimprägnierungen weisen zwar diese Nachteile nicht auf, sie haben jedoch schlechtere Schmiereigenschaften als die Phosphatimprägnierungen, was insbesondere bei extremer Trockenreibung zu lokaler Überhitzung und Zersetzung des Kunstharzes mit nachfolgenden höheren Verschleißwerten führt.

Es sind auch schon Anwendungsfälle bekannt, bei denen imprägnierte Kohlenstoffmaterialien verwendet wurden, die sowohl Salze als auch Polymere enthalten.

Aus DE-B-965 670 sind selbstschmierende imprägnierte Kohlelager, insbesondere Kupplungslager, bekannt, die Borsäure und/oder borsaure Salze und außerdem ein hartes, durch Wärme härtbares Harz auf Basis von Furfurylalkohol und/oder Furfuraldehyd enthalten.

In US-A-2 909 452 ist beschrieben, poröse elektrische Kohlenstoffkontaktbürsten mit Natriumpyrophosphat und Polyesterharz zu imprägnieren, wobei das Polyesterharz den nach Imprägnieren mit Pyrophosphat verbleibenden Porenraum ausfüllt.

Aus US-A-4 119 572 ist Kohlenbürstenmaterial bekannt, dessen Poren mit Phosphaten und einem filmbildenden Harz gefüllt sind. Beim Kohlenstoffmaterial handelt es sich um sogenannte Hartbrandkohle oder einen Kohlenstoffgraphit, der auf Temperaturen bis zu 1300°C erwärmt wurde.

Die Kombination von anorganischen Salzen und Polymeren bei der Imprägnierung führt zu Werkstoffen, die ein verbessertes Reibeverhalten aufweisen.

Aufgabe der Erfindung ist es, Verwendungen zu finden für Kohlegleitkörper, die hervorragende Gleiteigenschaften bei extremer Trockenreibung erfordern und bei denen die Nachteile der bekannten Imprägnierungen, insbesondere bei hoher Luftfeuchtigkeit und dynamischer Beanspruchung, vermieden werden.

Diese Aufgabe wird gelöst durch Verwendung von mit anorganischen Salzen und anschließend mit Polymeren imprägnierten Elektrographits als Gleitkörper in der Form von Dreh- bzw. Trennschiebern für Rotationspumpen und Kompressoren oder in Form von Gleitringen für trockenlaufende Gleitringdichtungen. Es wurde gefunden, daß man speziell imprägnierten Elektrographit aufgrund seiner herausragenden tribologischen Eigenschaften, wie gute Verschleißfestigkeit, extrem niedriger Reibwert bei Naßlauf und Mischreibung sowie niedrige Reibwerte bei Trockenlauf, hohe Belastbarkeit und fehlende Neigung zum Reibverschweißen, als Gleitwerkstoffe für Gleitringe und Schieber für Rotationskompressoren und Vakuumpumpen einsetzen kann.

Für Einsätze in Rotationskompressoren bzw. Vakuumpumpen müssen Graphitwerkstoffe so modifiziert sein, daß auch bei Trockenreibung akzeptable Verschleiß- und Reibwerte eingehalten werden können.

Die imprägnierten Körper aus Elektrographit werden hergestellt durch Einlagern von anorganischen Salzen in die Poren des Kohlegleitkörpers, indem der Kohlegleitkörper ein- oder mehrmals mit wäßrigen Lösungen anorganischer Salze getränkt und getrocknet und geglüht wird und anschließend eine Imprägnierung mit mindestens einem flüssigen wärmehärtbaren Polymer und Wärmebehandlung zum Aushärten des Polymer erfolgt, wobei das Polymere in den nach dem Imprägnieren mit Salz verbliebenen Poren eingelagert wird.

Als besonders für die erfindungsgemäße Verwendung geeignet hat sich ein Elektrographit erwiesen, der vor der Imprägnierung eine Dichte von 1.8 g/cm³, eine Biegefestigkeit von 54N/mm², einen spez. elektrischen Widerstand von 22 »mΩ und eine Rockwellhärte von HR 5/40:110 aufweist.

Bei der Imprägnierung wird vorzugsweise folgender Arbeitsablauf eingehalten: Es wird eine erste Imprägnierung nach an sich bekannten Verfahren mit anorganischen Salzen durchgeführt. Die Imprägnierung mit anorganischen Salzen, beispielsweise Zinkphosphat und/oder Aluminiumphosphat, kann aus der Schmelze, aber auch durch einmaliges oder mehrfaches Tränken mit wäßrigen Lösungen der Salze erfolgen mit anschließendem Trocknen unter Ausbildung eines glasartigen Filmes im Inneren der Poren oder auf inneren Teiloberflächen. Zur Ausbildung des glasartigen Filmes erfolgt eine Glühbehandlung bei 300°C bis 800°C während 2 h bis 30 h in inerter Atmosphäre. Es können auch Salzmischungen eingelagert werden. Anschließend erfolgt das Imprägnieren mit wärmehärtbarem flüssigen Polymer entweder unter Vakuum oder durch Druckbehandlung oder Kombinationen beider Maßnahmen. Grundsätzlich ist das Tränken auch allein durch Kapillarkräfte möglich. Das Polymer lagert sich auf dem Salzfilm ab und fixiert diesen in den Poren, so daß kein Ausschwitzen oder Ausbrechen bei dynamischer Beanspruchung des Elektrographit-Gleitkörpers mehr möglich ist.

Die Elektrographit-Gleitkörper haben vor der Imprägnierung ein Porenvolumen von 5 bis 20 Vol.%. Nach der zweistufigen Imprägnierung beträgt das Restvolumen 1 bis 6 Vol.%. In die Poren des Elektrographits werden von 1 Gew.% bis 15 Gew.%, vorzugsweise 3 bis 8 Gew.%, anorganische Salze und von 1 Gew.% bis 5 Gew.%, vorzugsweise 2 bis 4 Gew.%, Polymer, jeweils bezogen auf das Gesamtgewicht des Kohlegleitkörpers, eingelagert.

Geeignete wärmehärtbare Polymere sind Phenolharze, Furanharze, Epoxidharze, Acrylharze, Methacrylharze, Polyesterharze. Es können auch Harzmischungen verwendet werden. Die Harze können durch eine abschließende Wärmebehandlung bei 80°C bis 300°C während 0,5 h bis 42 h ausgehärtet werden.

### Beispiel 1

Ein als Trennschieber zu verwendender Elektrographitkörper mit den Abmessungen 240 mm x 75 mm x 6 mm aus Elektrographit, der bei Temperaturen bis ca. 300°C hergestellt wurde, mit einem Porenvolumen von 15 Vol.% wird wie folgt zunächst mit Aluminiumphosphat imprägniert.

Beim Imprägniervorgang wird eine Vakuum-Druckbehandlung ausgeführt und anschließend getrocknet und geglüht, wobei das Imprägnieren bei 25°C erfolgt.
Anlegen von Vakuum ca. 1 h.
Anlegen von Druck ca. 5 bar für ca. 2 h.
Trocknen 8 h bei 100°C.
Glühen 10 h bei 800°C.

Nach Abschluß der Imprägnierung enthält der Elektrographitkörper 4 Gew.% Imprägniermittel, bezogen auf das Grundgewicht von 194,4 g (= 1,8 g/cm³).

Anschließend erfolgt die Imprägnierung mit einem Polyesterharz auf der Basis eines Triethylenglycoldimethacrylats durch analoge Behandlung im Vakuum und anschließendes Beaufschlagen mit Druck.

Das Polymere wird danach während 8 h bei 150°C ausgehärtet.

Durch diese Imprägnierung werden 3 Gew.% Harz, bezogen auf das Gesamtgewicht des Kohlekörpers, eingelagert.

### Vergleichsbeispiel 1

Ein weiterer Trennschieber aus Kohlenstoff wird nur mit Aluminiumphosphat entsprechend Beispiel 1 imprägniert.

### Laufversuche mit den Kohletrennschiebern von Beispiel 1 und Vergleichsbeispiel 1:

Auf einem Testgerät wurden Laufversuche mit den beiden Trennschiebern durchgeführt. Die Gleitgeschwindigkeit betrug 14,5 m/s, der Anpreßdruck 0,7 bar und das Vakuum lag in einem Bereich zwischen 0,3 und 0,6 bar.

Nach 700 Stunden wurde der mittlere Verschleiß der Kohletrennschieber als Abrieb in »m pro Stunde ermittelt. Der entsprechend Vergleichsbeispiel 1 nur mit Aluminiumphosphat imprägnierte Schieber zeigte einen mittleren Verschleiß von 8,07 »m/h, während der nach dem erfindungsgemäßen Verfahren entsprechend Beispiel 1 imprägnierte Trennschieber nur einen mittleren Verschleiß von 4,65 »m/h aufwies.

### Laufversuch auf einer Horizontalprüfmaschine

In einem zweiten Versuch wurden zwei Kohlekörper, die nach den im Beispiel 1 und Vergleichsbeispiel 1 angegebenen Verfahren imprägniert wurden, einem zweiten Verschleißtest unterworfen. Gegenlaufmaterial Stahl v=6m/sec., » spez. (spez. Reibungskoeffizient).

Der Verschleiß des imprägnierten Elektrographitkörpers betrug nur 0,09 »m/h, während der nach Vergleichsbeispiel 1 imprägnierte Körper einen Verschleiß von 0,13 »m/h aufwies.

Gemäß einem Ausführungsbeispiels ist in einem Pumpengehäuse mit einem Einlaufstutzen und einem Auslaßstutzen auf der Welle ein Rotor angeordnet, in den Trennschieber eingefügt sind und der eine Endplatte aus speziell imprägniertem Elektrographit aufweist. Die Trennschieber haben vorzugsweise die Form rechteckiger oder quadratischer Platten. Die Anlaufkanten der Trennschieber sind vorzugsweise angeschrägt oder abgerundet, um Kantenausbrechen zu vermeiden und die Einlaufvorgänge zu verbessern. Als Gegenlaufwerkstoffe kommen in Frage Grauguß, Kohlenstoff-Graphitwerkstoffe, Chromstahlguß, hartverchromter oder hartvernickelter Stahl, Aluminiumgußteile, die vorzugsweise mit Al₂O₃ beschichtet sind.

Im Folgenden werden drei Einbaubeispiele von Gleitringen in Gleitringdichtungen beschrieben, die für Dichtungen zwischen Flüssigkeiten und Gasen oder zwischen Gasen verwendet werden können. Die Welle erstreckt sich dabei jeweils durch das Gehäuse. Erfindungsgemäß wird ein Gleitring oder es werden mehrere Gleitringe verwendet, die zwischen Welle und Gehäuse angeordnet sind. gemäß einem ersten Einbaubeispiel ist eine belastete Gleitringdichtung mit einem Gegenring aus Stahl und einem Federsystem mit einer Federaufnahme, die ebenfalls die Welle umgibt, vorgesehen. Bei dem zweiten Einbaubeispiel entlastet das Federsystem die Dichtung, während es beim ersten Einbaubeispiel die Dichtung belastet. Der Elektrographitgleitring steht fest und der Gegenring dreht sich mit der Welle.

Bei der dritten Ausführungsform sind zwei Gleitringe vorhanden, die sich auf der Welle drehen, während die Gegenringe fest stehen.

Als Gegenlaufwerkstoffe eignen sich besonders Grauguß, Chromstahlguß, gehärteter Wolframstahl, Wolframcarbid, Chromoxid, Siliziumcarbid, Kohlenstoff-Graphitwerkstoffe. Um ausreichende Dichtungswirkung zu erzielen, ist die Planheit von Gleitflächen von Bedeutung. Die Gleitflächen der Gleitringe aus imprägniertem Elektrographit werden deshalb besonders behandelt, um Rauhtiefen von 0,2-0,4 »m zu erreichen. Die Planheit der Gleitflächen soll in der Größenordnung von 1-2 Heliumlichtbändern liegen. Die Planheit kann mit einem Planglas und monochromatischem Licht auf einem Interferenzprüfgerät oder mit Laserstrahlen erfolgen.

Die erfindungsgemäß zu verwendenden Gleitringe können auch aus mehreren Teilen (Segmenten) aufgebaut sein. Dabei können die Teile stumpf aneinanderstoßen oder überlappten Stoß oder überlappt verzapften Stoß aufweisen.

Der Gleitring kann dreiteilig ausgeführt werden, wobei zwei Teile stumpf aneinanderstoßen oder überlappend ausgebildet sind.

Um für die erfindungsgemäße Verwendung geeignet zu sein, können die aus speziell imprägniertem Elektrographit hergestellten Gleitringe unterschiedliche Querschnitte mit Nuten oder Absätzen aufweisen.

## Patentansprüche

1. Verwendung von mit anorganischen Salzen und anschließend mit Polymeren imprägnierten Elektrographits als Gleitkörper in der Form von Dreh- bzw. Trennschiebern für Rotationspumpen und Kompressoren oder in der Form von Gleitringen für trockenlaufende Gleitringdichtungen.

2. Verwendung nach Anspruch 1,
**dadurch gekennzeichnet**,
daß in den Poren des Gleitkörpers von 1 Gew.% bis 15 Gew.%, bezogen auf das Gesamtgewicht des Gleitkörpers, anorganische Salze eingelagert sind.

3. Verwendung nach den Ansprüchen 1 oder 2,
**dadurch gekennzeichnet**,
daß in den Poren des Kohlegleitkörpers von 1 Gew.% bis 5 Gew.%, bezogen auf Gesamtgewicht des Kohlegleitkörpers, Polymer eingelagert ist.

4. Verwendung nach einem der Ansprüche 1 bis 3,
**dadurch gekennzeichnet**,
daß als anorganische Salze Aluminiumphosphat und/oder Zinkphosphat eingelagert sind.

5. Verwendung nach einem der Ansprüche 1 bis 4,
**dadurch gekennzeichnet**,
daß als Polymer ein wärmehärtbares Phenolharz, Furanharz, Epoxidharz, (Meth)acrylharz, Polyesterharz oder eine Mischung derselben eingelagert ist.

## Claims

1. Use of electrographite, impregnated with inorganic salts and then with polymers, as dry running sliding members in the form of rotary or dividing slides for rotary pumps and compressors or sliding rings for end seals.

2. Use in accordance with Claim 1, characterised by the fact that 1 to 15% by weight of inorganic salts, in relation to the total weight of the sliding member, are embedded in the pores of said member.

3. Use in accordance with Claim 1 or 2, characterised by the fact that 1 to 5% by weight of polymer, in relation to the total weight of the carbon sliding member, are embedded in the pores of said member.

4. Use in accordance with any one of Claims 1 to 3, characterised by the fact that the embedded inorganic salts comprise aluminium phosphate and/or zinc phosphate.

5. Use in accordance with any one of Claims 1 to 4, characterised by the fact that the polymer embedded consists of a heat-hardenable phenolic resin, furan resin, epoxide resin, (meth)acrylic resin, polyester resin or a mixture thereof.

## Revendications

1. Utilisation d'électrographite, imprégné avec des sels anorganiques puis avec des polymères, comme corps de glissement se présentant sous la forme de tiroirs rotatifs ou à séparation pour des pompes rotatives et des, compresseurs, ou bien se présentant soús la forme d'anneaux de glissement pour des joints d'étanchéité à anneaux de coulissement fonctionnant à sec.

2. Utilisation selon la revendication 1, caractérisée en ce que, dans les pores du corps de glissement, est introduit de 1 à 15 % en poids de sel anorganique, par rapport au poids total du corps de glissement.

3. Utilisation selon la revendication 1 ou 2, caractérisée en ce qu'un polymère est introduit dans les pores du corps de glissement carboné, en une quantite de 1 à 5 % en poids par rapport au poids total du corps de glissement carboné.

4. Utilisation selon l'une des revendications 1 à 3, caractérisée en ce qu'on introduit comme sels anorganiques du phosphate d'aluminium et/ou du phosphate de zinc.

5. Utilisation selon l'une des revendications 1 à 4, caractérisée en ce que l'on introduit comme polymère une résine phénolique thermodurcissable, une résine furanique, une résine époxid, une résine (méth)acrylique, une résine polyester ou un mélange de celle-ci.
